# EUROPEAN PATENT APPLICATION

(11) **EP 4 227 340 A1**
(43) Date of publication of application: **16.08.2023**
(21) Application number: 21877487.5
(22) Date of filing: 30.09.2021
(51) Int. Cl.: C08G 59/06, C08G 59/62, C08G 59/68, C08L 83/04, C08L 101/00, C08L 63/00, H01F 1/26, C08K 3/08

(54) **RESIN MOLDING MATERIAL, MOLDED BODY, AND METHOD FOR PRODUCING SAID MOLDED BODY**

(30) Priority: 05.10.2020 JP 2020168308
(71) Applicant: Sumitomo Bakelite Co.Ltd., Shinagawa-ku Tokyo 140-0002 (JP)
(72) Inventor: YAMASHITA, Katsushi, Tokyo 140-0002 (JP); NOTSU, Kensuke, Tokyo 140-0002 (JP)
(74) Representative: Müller-Boré & Partner Patentanwälte PartG mbB
(86) International application number: PCT/JP2021/036198
(87) International publication number: WO 2022/075186

(57) **Abstract**

A resin molding material of the present invention is used for transfer molding or compression molding, the resin molding material containing (A) soft magnetic particles, (B) a silicone compound which is liquid at normal temperature (25°C), and (C) a thermosetting resin, in which a content of the soft magnetic particles (A) is equal to or more than 96% by mass.

## Description

### TECHNICAL FIELD

The present invention relates to a resin molding material, a molded product, and a method for producing the molded product.

### BACKGROUND ART

As parts of various electrical and electronic products, a coil (also referred to as "reactor", "inductor", or the like depending on application fields) including a magnetic core and an exterior member has been actively studied. In addition, magnetic materials with moldability, for producing the magnetic core or the exterior member of such coils, has also been actively studied.

For example, Patent Document 1 discloses a composition containing a metallic-element containing powder, an epoxy resin, and a compound having a siloxane bond. In the document, it is disclosed that, for the purpose of reducing molding shrinkage of the composition, the compound having a siloxane bond is contained in an amount of equal to or more than 25 parts by mass and equal to or less than 45 parts by mass with respect to 100 parts by mass of the epoxy resin.

Patent Document 2 discloses a resin molding material containing a magnetic powder in which a surface is coated with a predetermined silicone compound, and a thermosetting resin. In the document, it is disclosed that it is possible to achieve both high filling rate in a molded product and high fluidity during molding.

### RELATED DOCUMENT

### PATENT DOCUMENTS

[Patent Document 1] International Publication No. WO2019/229960
[Patent Document 2] Japanese Unexamined Patent Publication No. 2020-114939

### SUMMARY OF THE INVENTION

### TECHNICAL PROBLEM

Here, in the magnetic material obtained from the resin molding material (composition) by transfer molding or compression molding, it is necessary to increase filling of soft magnetic particles in order to improve magnetic characteristics such as magnetic permeability. However, in a case where the filling amount of the soft magnetic particles is increased, a viscosity of the resin molding material is increased, and fillability into a mold is lowered during molding such as compression molding. That is, there is a trade-off relationship between increasing the magnetic permeability of the magnetic material and improving the fillability into the mold.

In Patent Document 1, a large amount of the compound having a siloxane bond is added, so that bleeding out may occur during molding, and the surface of the molded product, the surface of the mold, or the like may be contaminated.

In Patent Document 2, a small amount of the predetermined silicone compound is present on the surface of the magnetic powder. In a case where the soft magnetic particles are highly filled, the amount of the silicone compound present between the soft magnetic particles affects the fluidity more, so that in the document, there is room for improvement in the fluidity of the resin molding material.

### SOLUTION TO PROBLEM

As a result of intensive studies, the present inventors have completed the inventions provided below and solved the above-described problems. That is, the present invention can be shown below.

According to the present invention, there is provided a resin molding material used for transfer molding or compression molding, containing (A) soft magnetic particles, (B) a silicone compound which is liquid at normal temperature (25°C), and (C) a thermosetting resin, in which a content of the soft magnetic particles (A) is equal to or more than 96% by mass.

According to the present invention, there is provided a molded product obtained by curing the above-described resin molding material.

According to the present invention, there is provided a method for producing a molded product, including a step of injecting a molten material of the above-described resin molding material into a mold using a transfer molding apparatus and a step of curing the molten material.

According to the present invention, there is provided a method for producing a molded product, including a step of compression-molding the above-described resin molding material.

### ADVANTAGEOUS EFFECTS OF INVENTION

According to the present invention, it is possible to provide a resin molding material used for transfer molding or compression molding, with which a magnetic material having high magnetic permeability and which is excellent in fillability into a mold.

### BRIEF DESCRIPTION OF THE DRAWINGS

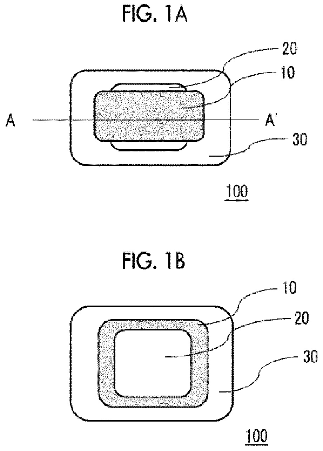

Figs. 1A and 1B are cross-sectional views showing a configuration of a structural body according to the present embodiment.

### DESCRIPTION OF EMBODIMENTS

Hereinafter, embodiments of the present invention will be described with reference to the drawings. In all drawings, the same constituents are designated by the same reference numerals, and description thereof will not be repeated. In addition, for example, "1 to 10" represents from "equal to or more than 1" to "equal to or less than 10" unless otherwise specified.

A resin molding material according to the present embodiment, which is used for transfer molding or compression molding, contains (A) soft magnetic particles, (B) a silicone compound, and (C) a thermosetting resin, in which a content of the soft magnetic particles (A) is equal to or more than 96% by mass.

As a result, it is possible to provide a resin molding material with which a magnetic material having high magnetic permeability and which is excellent in fillability into a mold.

The resin molding material according to the present embodiment can be suitably used for transfer molding or compression molding. Examples of a molding method similar to the compression molding include powder compaction.

In the compression molding, a mold is filled with the resin molding material, and after the resin molding material is sufficiently softened and fluidized at a low pressure, the mold is closed, and then heated and pressed at a mold temperature of approximately 150°C and a compression pressure of approximately 10 MPa. On the other hand, in the powder compaction, the resin molding material is filled in a mold, molded at a high pressure of approximately 1,000 MPa, and annealed at a high temperature of equal to or higher than 500°C for the purpose of removing residual strain.

As described above, the compression molding and the powder compaction are molding methods that differ in molding pressure and temperature.

The resin molding material according to the present embodiment is designed to be suitably used for transfer molding or compression molding. Therefore, in a case where the resin molding material is used for the powder compaction performed under high temperature and high pressure conditions as described above, due to generation of volatile matter, voids may be generated or unfilling may occur, so that it is difficult to achieve the effect of molding freedom due to the high fillability of the resin molding material according to the present embodiment.

Hereinafter, each component contained in the resin molding material according to the present embodiment will be described.

### [Soft magnetic particles (A)]

The soft magnetism refers to ferromagnetism having a small coercive force, and generally, ferromagnetism having a coercive force of equal to or less than 800 A/m is referred to as soft magnetism.

Examples of a constituent material of the soft magnetic particles (A) include a metal-containing material having an iron content of equal to or more than 85% by mass as a constituent element. Such a metal material having a high iron content as a constituent element exhibits soft magnetism in which magnetic characteristics such as magnetic permeability and magnetic flux density are relatively good. Therefore, it is possible to obtain a resin molding material capable of exhibiting good magnetic characteristics, for example, in a case of being molded into a magnetic core or the like.

Examples of a form of the metal-containing material include simple substances, solid solutions, eutectic crystals, and alloys such as an intermetallic compound. By using the particles including such a metal material, it is possible to obtain a resin molding material having excellent magnetic characteristics derived from iron, that is, magnetic characteristics such as high magnetic permeability and high magnetic flux density.

In addition, the above-described metal-containing material may contain an element other than iron as a constituent element. Examples of the element other than iron include B, C, N, O, Al, Si, P, S, Ti, V, Cr, Mn, Co, Ni, Cu, Zn, Y, Zr, Nb, Mo, Cd, In, and Sn, and one kind of these may be used or two or more kinds of these may be used in combination. In the present embodiment, one or more elements selected from Fe, Ni, Si, and Co can be included as a main element.

Specific examples of the above-described metal-containing material include pure iron, silicon steel, iron-cobalt alloy, iron-nickel alloy, iron-chromium alloy, iron-aluminum alloy, carbonyl iron, stainless steel, and a composite material containing one or two or more of these. From the viewpoint of availability and the like, silicon steel or carbonyl iron can be preferably used.

The soft magnetic particles (Fe-based soft magnetic particles) may be other particles. For example, the soft magnetic particles may be magnetic particles including Ni-based soft magnetic particles, Co-based soft magnetic particles, and the like.

A median diameter D₅₀ of the soft magnetic particles (A) on a volume basis is preferably 0.5 to 75 µm, more preferably 0.75 to 65 µm, and still more preferably 1 to 60 um. By appropriately adjusting the particle diameter (median diameter), it is possible to further improve the fluidity during molding and improve magnetic performance.

The D₅₀ can be obtained by, for example, a laser diffraction/scattering type particle diameter distribution measuring device. Specifically, a particle diameter distribution curve is obtained by measuring the soft magnetic particles (A) in a dry manner with a particle diameter distribution measuring device "LA-950" manufactured by HORIBA, Ltd., and the D₅₀ can be obtained by analyzing this distribution curve.

The resin molding material according to the present embodiment contains the soft magnetic particles (A) in an amount of equal to or more than 96% by mass. The upper limit value thereof is equal to or less than 98% by mass. As a result, a magnetic material with high magnetic permeability can be obtained.

In addition, the resin molding material according to the present embodiment contains the soft magnetic particles (A) in an amount of equal to or more than 82% by volume, preferably equal to or more than 84% by volume. The upper limit value thereof is equal to or less than 90% by volume.

### [Silicone compound (B)]

As the silicone compound (B), a known silicone compound can be used as long as the effects of the present invention are exhibited. It is preferable that the silicone compound (B) is liquid at normal temperature (25°C). As a result, the fluidity of the resin molding material is increased, the fillability into the mold is more excellent, and wettability is also improved, thereby suppressing generation of voids and the like.

In Patent Document 1 (International Publication No. WO2019/229960), it is disclosed that, by containing the siloxane compound, elasticity of the entire composition is reduced, and stress acting on the composition due to mold shrinkage (thermal curing) of the composition is reduced (paragraph 0110). That is, in the document, it is considered that, by using a solid siloxane compound, a soft domain structure such as a finely dispersed structure can be formed in a case of being melt-kneaded, which relaxes stress of the composition after curing. On the other hand, in the present invention, by using the silicone compound (B) which is liquid at normal temperature (25°C), it is possible to improve the fluidity, the fillability into the mold, and wettability of the resin molding material (resin composition) during molding, and not same as Patent Document 1, the present invention does not aim to improve physical properties of the molded product after curing.

As the silicone compound (B), a silicone compound represented by General Formula (1) can be preferably used.

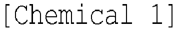

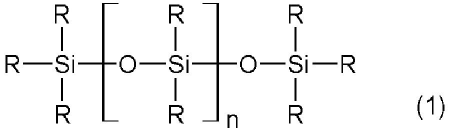

In General Formula (1), R's each independently represent a substituted or unsubstituted monovalent organic group having 1 to 10 carbon atoms, and at least one of R's is a group selected from an amino group-substituted organic group, an epoxy group-substituted organic group, a polyoxyalkylene group-containing organic group, a hydroxyl group-substituted organic group, a vinyl group-substituted organic group, a carboxyl group-substituted organic group, an isocyanate group-substituted organic group, a mercapto group-substituted organic group, a (meth)acrylic group-substituted organic group, and an acid anhydride group-substituted organic group. n represents an integer of 1 to 100.

In a case where at least one of R's is the above-described group, the rest of R's is preferably an alkyl group or alkoxy group having 1 to 10 carbon atoms, more preferably an alkyl group having 1 to 10 carbon atoms, and still more preferably an alkyl group having 1 to 5 carbon atoms.

In the present embodiment, from the viewpoint of the effects of the present invention, it is preferable that at least one of R's is an epoxy group-substituted organic group.

From the viewpoint of the effects of the present invention, a functional group equivalent weight of the silicone compound (B) is preferably 200 to 30,000, and more preferably 300 to 20,000.

In addition, a weight-average molecular weight of the silicone compound (B) is preferably 200 to 10,000, and more preferably 500 to 8,000.

As the silicone compound (B), it is preferable to use a silicone compound represented by General Formula (1a).

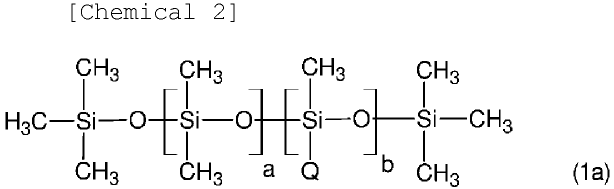

In General Formula (1a), Q is an epoxy group-substituted organic group or a polyoxyalkylene group-containing organic group, and a plurality of Q's may be the same or different from each other. Q preferably includes an epoxy group-substituted organic group.
a represents an integer of 1 to 50, and b represents an integer of 1 to 50.

The above-described epoxy group-substituted organic group can be represented by General Formula (a).

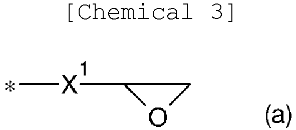

In Formula (a), X¹ represents an alkylene group having 1 to 10 carbon atoms or an oxyalkylene group having 1 to 10 carbon atoms, in which the alkylene group may include an ether group. * represents a bonding site.

The above-described polyoxyalkylene group-containing organic group can be represented by General Formula (b).

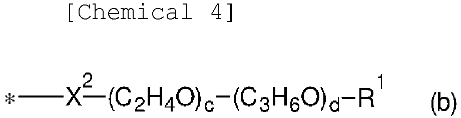

In Formula (b), X² represents an alkylene group having 1 to 10 carbon atoms or an oxyalkylene group having 1 to 10 carbon atoms, and R¹ represents a hydrogen atom or an alkylene group having 1 to 3 carbon atoms.
c represents an integer of 1 to 20, and d represents an integer of 1 to 20.
* represents a bonding site.

Examples of the silicone compound (B) include SF8421EG, FZ-3730, BY16-869, BY16-870, X-22-4741, X-22-178SX, and X-22-178DX (all manufactured by Toray·Dow Corning); and KF-1002 and X-22-343 (both manufactured by Shin-Etsu Chemical Co., Ltd.).

From the viewpoint of the effects of the present invention, the resin molding material according to the present embodiment can contain the silicone compound (B) in an amount of preferably equal to or less than 0.5% by mass, more preferably equal to or less than 0.4% by mass, and still more preferably equal to or less than 0.3% by mass. The lower limit value thereof is equal to or more than 0.01% by mass, preferably equal to or more than 0.05% by mass. In a case where the content of the silicone compound (B) is more than the above-described range, the resin molding material may be solidified at normal temperature, resulting in poor handleability. In particular, in the compression molding, uneven spreading may occur, making it impossible to obtain a desired molded product.

In the present embodiment, the silicone compound (B) is not contained for the purpose of improving molding shrinkage, and the amount added is preferably within the above-described range.

Since the resin molding material according to the present embodiment contains the silica fine powder (F) in the amount described above together with the soft magnetic particles (A) contained in the amount described above, a magnetic material having high magnetic permeability is obtained, and a resin molding material having sufficient fluidity is obtained, which is excellent in the fillability into the mold.

### [Thermosetting resin (C)]

Examples of the thermosetting resin (C) include an epoxy resin, a phenol resin, a polyimide resin, a bismaleimide resin, a urea resin, a melamine resin, a polyurethane resin, a cyanate ester resin, a silicone resin, an oxetane resin (oxetane compound), a (meth) acrylate resin, an unsaturated polyester resin, a diallyl phthalate resin, and a benzoxazine resin. These may be used alone or in combination of two or more thereof. From the viewpoint of heat resistance, the thermosetting resin (C) preferably includes, for example, an epoxy resin.

As the epoxy resin, known compounds can be used without particular limitation as long as the effects of the present invention can be exhibited.

### (Epoxy resin)

Examples of the above-described epoxy resin include bisphenol-type epoxy resins such as a bisphenol A-type epoxy resin, a bisphenol F-type epoxy resin, a tetramethyl bisphenol F-type epoxy resin, a bisphenol S-type epoxy resin, a bisphenol E-type epoxy resin, a bisphenol M-type epoxy resin, a bisphenol P-type epoxy resin, and a bisphenol Z-type epoxy resin; novolac-type epoxy resins such as a phenol novolac-type epoxy resin and a cresol novolac-type epoxy resin; and a biphenyl-type epoxy resin, a biphenylaralkyl-type epoxy resin, an arylalkylene-type epoxy resin, a naphthalene-type epoxy resin, an anthracene-type epoxy resin, a phenoxy-type epoxy resin, a dicyclopentadiene-type epoxy resin, a norbornene-type epoxy resin, an adamantane-type epoxy resin, a fluorene-type epoxy resin, and a trisphenylmethane-type epoxy resin.

The resin molding material according to the present embodiment may include only one type of the epoxy resin, or may include two or more types of the epoxy resin. In addition, epoxy resins of the same type, which have different molecular weights, may be used in combination.

From the viewpoint of the effects of the present invention, it is preferable that the epoxy resin in the present embodiment is at least one selected from an epoxy resin including a triphenylmethane structure, an epoxy resin including a biphenyl structure, and a bisphenol A-type or F-type epoxy resin.

In the present embodiment, it is more preferable to use a combination of an epoxy resin including a triphenylmethane structure and a bisphenol A-type or F-type epoxy resin, or use an epoxy resin including a biphenyl structure.

The epoxy resin including a triphenylmethane structure is specifically an epoxy resin including a partial structure in which three of four hydrogen atoms of methane (CH₄) are substituted with benzene rings. The benzene rings may be unsubstituted or substituted with a substituent. Examples of the substituent include a hydroxy group and a glycidyloxy group.

Specifically, the epoxy resin including a triphenylmethane structure includes a structural unit represented by General Formula (a1). A triphenylmethane skeleton is formed by connecting two or more of these structural units.

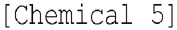

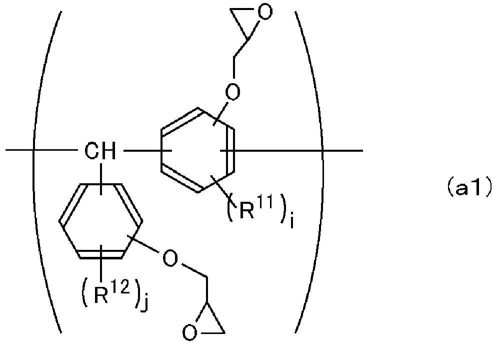

In General Formula (a1),
in a case of a plurality of R¹¹' s, the plurality of R¹¹' s are each independently a monovalent organic group, a halogen atom, a hydroxy group, or a cyano group,
in a case of a plurality of R¹²' s, the plurality of R¹²' s are each independently a monovalent organic group, a halogen atom, a hydroxy group, or a cyano group,
i is an integer of 0 to 3, and
j is an integer of 0 to 4.

Examples of the monovalent organic group of R¹¹ and R¹² include those listed as a monovalent organic group of R^{a} and R^{b} in General Formula (BP) described later.
i and j are each independently preferably 0 to 2 and more preferably 0 or 1.

In one aspect, both i and j are 0. That is, as the one aspect, all benzene rings in General Formula (a1) do not have a substituent other than the specified glycidyloxy group as a monovalent substituent.

The epoxy resin including a biphenyl structure is specifically an epoxy resin including a structure in which two benzene rings are linked by a single bond. The benzene ring here may or may not have a substituent.

Specifically, the epoxy resin including a biphenyl structure has a partial structure represented by General Formula (BP).

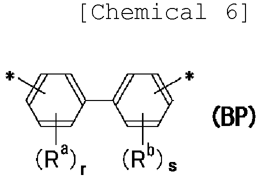

In General Formula (BP),
in a case of a plurality of R^{a}'s or R^{b}'s, the plurality of R^{a}'s or R^{b}'s are each independently a monovalent organic group, a hydroxyl group, or a halogen atom,
r and s are each independently 0 to 4, and
* represents that it is linked to another atomic group.

Specific examples of the monovalent organic group of R^{a} and R^{b} include an alkyl group, an alkenyl group, an alkynyl group, an alkylidene group, an aryl group, an aralkyl group, an alkaryl group, a cycloalkyl group, an alkoxy group, a heterocyclic group, and a carboxyl group.

Examples of the alkyl group include a methyl group, an ethyl group, an n-propyl group, an isopropyl group, an n-butyl group, an isobutyl group, a sec-butyl group, a tert-butyl group, a pentyl group, a neopentyl group, a hexyl group, a heptyl group, an octyl group, a nonyl group, and a decyl group.

Examples of the alkenyl group include an allyl group, a pentenyl group, and a vinyl group.

Examples of the alkynyl group include an ethynyl group.

Examples of the alkylidene group include a methylidene group and an ethylidene group.

Examples of the aryl group include a tolyl group, a xylyl group, a phenyl group, a naphthyl group, and an anthracenyl group.

Examples of the aralkyl group include a benzyl group and a phenethyl group.

Examples of the alkaryl group include a tolyl group and a xylyl group.

Examples of the cycloalkyl group include an adamantyl group, a cyclopentyl group, a cyclohexyl group, and a cyclooctyl group.

Examples of the alkoxy group include a methoxy group, an ethoxy group, an n-propoxy group, an isopropoxy group, an n-butoxy group, an s-butoxy group, an isobutoxy group, a t-butoxy group, an n-pentyloxy group, a neopentyloxy group, and an n-hexyloxy group.

Examples of the heterocyclic group include an epoxy group and an oxetanyl group.

The total number of carbon atoms in the monovalent organic group of R^{a} and R^{b} is, for example, 1 to 30, preferably 1 to 20, more preferably 1 to 10, and particularly preferably 1 to 6.
r and s are each independently preferably 0 to 2 and more preferably 0 or 1. In one aspect, both r and s are 0.

More specifically, the epoxy resin including a biphenyl structure is preferably a biphenylaralkyl-type epoxy resin having a structural unit represented by General Formula (BP1).

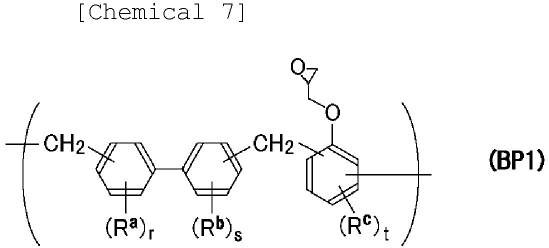

In General Formula (BP1),
definitions and specific aspects of R^{a} and R^{b} are the same as those of General Formula (BP),
definitions and preferred ranges of r and s are the same as those of General Formula (BP),
in a case of a plurality of R^{c}'s, the plurality of R^{c}'s are each independently a monovalent organic group, a hydroxyl group, or a halogen atom, and
t is an integer of 0 to 3.

Specific examples of the monovalent organic group of R^{c} include the same monovalent organic group as those mentioned as specific examples of R^{a} and R^{b}.
t is preferably 0 to 2 and more preferably 0 or 1.

Specific examples of the bisphenol A-type or F-type epoxy resin (epoxy resin produced by a condensation reaction of bisphenol A or bisphenol F with epichlorohydrin) include an epoxy resin represented by General Formula (EP).

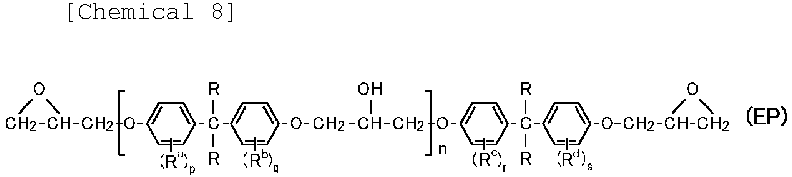

In General Formula (EP),
a plurality of R's are each independently a hydrogen atom or a methyl group, preferably a methyl group,
in a case of a plurality of R^{a}'s, R^{b}'s, R^{c}'s, or R^{d}'s, the plurality of R^{a}'s, R^{b}'s, R^{c}'s, or R^{d}'s are each independently a monovalent organic group, a hydroxyl group, or a halogen atom,
p, q, r, and s are each independently 0 to 4, preferably 0 to 2, and
n is an integer of 0 or more, usually 0 to 10 and preferably 0 to 5.

Specific examples of the monovalent organic group of R^{a}, R^{b}, R^{c}, and R^{d} include the same monovalent organic group as those mentioned as specific examples the monovalent organic group of R^{a} and R^{b} in General Formula (BP).

In the present embodiment, it is preferable to use a bisphenol A-type epoxy resin in which R's are methyl groups.

An amount of the epoxy resin in the resin molding material according to the present embodiment is, for example, 0.1% to 20% by mass, preferably 0.5% to 10% by mass.

The amount of the epoxy resin in the resin molding material according to the present embodiment is, for example, 0.5% to 60% by volume, preferably 3% to 40% by volume.

### (Phenol resin)

The phenol resin is not particularly limited, and examples thereof include novolac-type phenol resins such as a phenol novolac resin, a cresol novolac resin, and a bisphenol A novolac resin; and resol-type phenol resins. One of these may be used alone, or two or more thereof may be used in combination.

Among the phenol resins, a phenol novolac resin is preferable.

### (Urea resin)

The urea resin is not particularly limited, and examples thereof include a resin obtained by a condensation of urea and formaldehyde.

### (Melamine resin)

The melamine resin is not particularly limited, and for example, a resin obtained by reacting melamine and formaldehyde under neutral or weak alkali can be used.

In addition, as the melamine resin, a commercially available product such as a melamine resin manufactured by Sumitomo Chemical Co., Ltd. can also be used.

### (Unsaturated polyester resin)

The unsaturated polyester resin is not particularly limited, and for example, the unsaturated polyester resin includes an orthotype using phthalic acid anhydride as a raw material, which is the most common, an isotype using isophthalic acid as a raw material, or a paratype using terephthalic acid as a raw material can be used. In addition, the unsaturated polyester resin includes a prepolymer thereof. One of these may be used alone, or two or more thereof may be used in combination.

### (Polyimide resin)

The polyimide resin is not particularly limited, and for example, the polyimide resin can be synthesized by copolymerizing diamine, dianhydride, and anhydride to synthesize a polyamic acid which is a precursor of polyimide, and then imidizing the polyamic acid.

### [Phenol-based curing agent (D)]

The resin molding material according to the present embodiment can further contain a phenol-based curing agent (D).

As a result, it is expected that durability of a molded product to be obtained is further improved. The phenol-based curing agent typically has two or more hydroxy groups in one molecule.

The phenol-based curing agent preferably includes any skeleton selected from the group consisting of a novolac skeleton and a biphenyl skeleton. In a case where the phenol-based curing agent includes any of these skeletons, the durability of the molded product can be particularly enhanced.

Specifically, the "biphenyl skeleton" is a structure in which two benzene rings are connected by a single bond as in General Formula (BP) in the above description of the epoxy resin.

Specific examples of the phenol-based curing agent having a biphenyl skeleton include compounds having a structure in which, in General Formula (BP1) in the above description of the epoxy resin, the glycidyl group is substituted with a hydrogen atom.

Specific examples of the phenol-based curing agent having a novolac skeleton include compounds having a structural unit represented by General Formula (N).

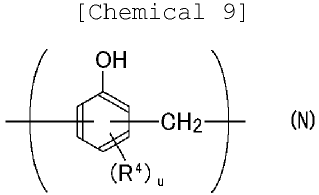

In General Formula (N),
R⁴ represents a monovalent substituent, and
u is an integer of 0 to 3.

Specific examples of the monovalent substituent of R⁴ include the same as those described as the monovalent substituent of R^{a} and R^{b} in General Formula (BP).
u is preferably 0 to 2, more preferably 0 or 1, and still more preferably 0.

In the present embodiment, it is preferable that the phenol-based curing agent (D) is at least one selected from a novolac-type phenol resin and a biphenylaralkyl-type phenol resin.

In a case where the phenol-based curing agent (D) is a polymer or an oligomer, the number-average molecular weight (standard polystyrene-equivalent value measured by GPC) of the phenol-based curing agent (D) is, for example, approximately 200 to 800.

A content of the phenol-based curing agent (D) in the resin molding material is, for example, 0.1% to 20% by mass, preferably 0.5% to 10% by mass.

In addition, the content of the phenol-based curing agent (D) in the resin molding material is, for example, 0.5% to 60% by volume, preferably 3% to 40% by volume.

By appropriately adjusting the amount of the phenol-based curing agent (D), the fluidity can be further improved, and mechanical properties or magnetic characteristics of a cured product to be obtained can be improved.

### [Curing accelerator (E)]

The resin molding material according to the present embodiment can further contain a curing accelerator (E). The curing accelerator (E) is not particularly limited as long as it accelerates a curing reaction of the epoxy resin, and a known epoxy curing accelerator can be used.

Specific examples thereof include phosphorus atom-containing compounds such as organic phosphine, a tetra-substituted phosphonium compound, a phosphobetaine compound, an adduct of phosphine compound and quinone compound, and an adduct of phosphonium compound and silane compound; imidazoles (imidazole-based curing accelerators) such as 2-methylimidazole and 2-phenylimidazole; and nitrogen atom-containing compounds such as amidines and tertiary amines, for example, 1,8-diazabicyclo[5.4.0]undecene-7 and benzyldimethylamine, and quaternary salts of amidine or amine.

A tetra-substituted phosphonium compound, a phosphobetaine compound, a phosphine compound, an adduct of a phosphine compound and a quinone compound, or an adduct of a phosphonium compound and a silane compound is preferable.

In a case where the curing accelerator (E) is used, only one type may be used, or two or more types may be used.

In a case where the curing accelerator (E) is used, a content thereof is preferably 0.01% to 1% by mass and more preferably 0.04% to 0.8% by mass with respect to the entire resin molding material. A volume fraction thereof is preferably 0.05% to 5% by volume, and more preferably 0.10% to 0.4% by volume. By setting such a numerical range, a sufficient curing accelerating effect can be obtained without excessively deteriorating other performance.

### [Silica fine powder (F)]

The resin molding material according to the present embodiment can further contain a silica fine powder (F).

An average particle diameter of the silica fine powder (F) is equal to or more than 0.1 um and equal to or less than 2.0 µm, preferably equal to or more than 0.1 um and equal to or less than 1.5 um, and more preferably equal to or more than 0.1 um and equal to or less than 1.0 um. As a result, the silica fine powder (F) is uniformly dispersed in the resin molding material, so that fluidity is further improved and the fillability or moldability can be further improved. Therefore, a molded product with less molding defects is obtained, and particularly good magnetic characteristics are obtained in the molded product.

Since the silica fine powder (F) has a high affinity with thermosetting resins and has high insulating property, the silica fine powder (F) is useful as a constituent material for non-magnetic powders used in resin molding materials.

A true specific gravity of the silica fine powder (F) is preferably 1.0 to 6.0, more preferably 1.2 to 5.0, and still more preferably 1.5 to 4.5. Since such a silica fine powder (F) has a small specific gravity, the silica fine powder (F) easily flows together with a molten material of the thermosetting resin. Therefore, in a case where the molten material of the thermosetting resin flows toward gaps of a molding mold during molding, the silica fine powder (F) easily flows together with the molten material.

In addition, a sphericity of the silica fine powder (F) is not particularly limited, but is preferably 0.50 to 1.00 and more preferably 0.75 to 1.00. In a case where the sphericity of the silica fine powder (F) is within the above-described range, fluidity of the resin molding material can be ensured by utilizing rolling properties of the silica fine powder (F) itself.

The resin molding material according to the present embodiment can contain the silica fine powder (F) in an amount of equal to or less than 1.5% by mass, preferably equal to or less than 1.2% by mass and more preferably equal to or less than 1.0% by mass. From the viewpoint of the effects of the present invention, the lower limit value thereof is equal to or more than 0.05% by mass, preferably equal to or more than 0.1% by mass.

In addition, a volume fraction of the silica fine powder (F) is equal to or less than 4% by volume, preferably equal to or less than 3% by volume and more preferably equal to or less than 2% by volume. The lower limit value thereof is equal to or more than 0.14% by volume, preferably equal to or more than 0.5% by volume.

The average particle diameter of the silica fine powder (F) means a volume average particle diameter (for example, D₅₀), which can be measured using a laser diffraction particle diameter distribution analyzer.

The sphericity of particles such as the silica fine powder (F) can be obtained by isoarea equivalent circle diameter/circumscribed circle diameter, in a case where, in a scanning electron microscope (SEM) image of each particle, a perfect circle equal to the area is defined as an isoarea equivalent circle. For 10 or more randomly selected particles, the isoarea equivalent circle diameter/circumscribed circle diameter is calculated, and the average value thereof is defined as "sphericity of particles".

### [Carboxylic acid-based dispersant]

The resin molding material according to the present embodiment can further contain a carboxylic acid-based dispersant. By containing the carboxylic acid-based dispersant, the fillability of the resin molding material into the mold can be further improved.

As the carboxylic acid-based dispersant, a known compound in the related art can be used without particular limitation as long as the effects of the present invention can be exhibited. In the present embodiment, it is preferable that the carboxylic acid-based dispersant includes at least one compound represented by General Formula (i).

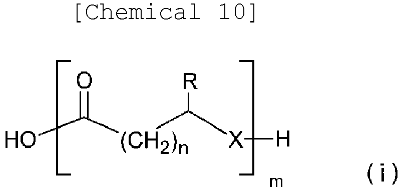

In General Formula (i), R represents a carboxyl group, a hydroxyl group, an alkyl group having 1 to 10 carbon atoms, an alkoxy group having 1 to 10 carbon atoms, an alkylcarboxyl group having 1 to 5 carbon atoms, an alkoxycarboxyl group having 1 to 5 carbon atoms, an alkyl alcohol group having 1 to 5 carbon atoms, or an alkoxy alcohol group having 1 to 5 carbon atoms, and a plurality of R's may be the same or different from each other.

R is preferably a carboxyl group, a hydroxyl group, an alkyl group having 1 to 10 carbon atoms, an alkoxy group having 1 to 10 carbon atoms, or an alkylcarboxyl group having 1 to 5 carbon atoms.

X represents an oxygen atom, an alkylene group having 1 to 30 carbon atoms, a divalent chain hydrocarbon group having 1 to 30 carbon atoms and having 1 or more double bonds, or a divalent chain hydrocarbon group having 1 to 30 carbon atoms and having 1 or more triple bonds, and a plurality of X's may be the same or different from each other. Examples of the divalent chain hydrocarbon group include an alkylene group.

X is preferably an oxygen atom, an alkylene group having 1 to 20 carbon atoms, or a divalent chain hydrocarbon group having 1 to 20 carbon atoms and having 1 or more double bonds, and more preferably an oxygen atom, an alkylene group having 1 to 20 carbon atoms, or an alkylene group having 1 to 20 carbon atoms and having 1 double bond.
n represents an integer of 0 to 20, and m represents an integer of 1 to 5.

The compound represented by General Formula (i) is preferably a compound represented by General Formula (ia) or General Formula (ib) . The carboxylic acid-based dispersant can include at least one selected from these compounds.

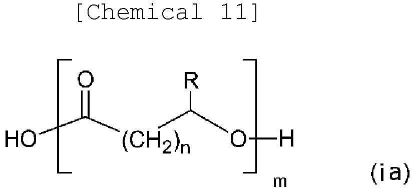

In General Formula (ia), R, m, and n have the same definitions as in General Formula (i).

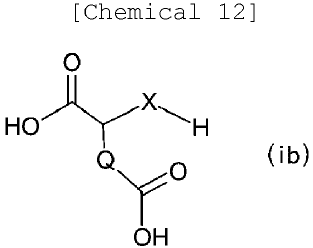

In General Formula (ib), Q represents an alkylene group having 1 to 5 carbon atoms, and is preferably an alkylene group having 1 to 3 carbon atoms. X has the same definition as in General Formula (1).

An acid value of the carboxylic acid-based dispersant is 5 to 500 mgKOH/g, preferably 10 to 350 mgKOH/g and more preferably 15 to 100 mgKOH/g. In a case where the acid value is within the above-described range, a magnetic material having a high saturation magnetic flux density is obtained, and fluidity is excellent and moldability is excellent.

The carboxylic acid-based dispersant is preferably solid or waxy.

From the viewpoint of the effects of the present invention, a content of the carboxylic acid-based dispersant is equal to or more than 0.01% by mass and equal to or less than 2% by mass, preferably equal to or more than 0.05% by mass and equal to or less than 1% by mass with respect to 100% by mass of the resin molding material.

Examples of the compound represented by General Formula (i) included in the carboxylic acid-based dispersant include Hypermer KD-4 (mass-average molecular weight: 1700, acid value: 33 mgKOH/g), Hypermer KD-9 (mass-average molecular weight: 760, acid value: 74 mgKOH/g), Hypermer KD-12 (mass-average molecular weight: 490, acid value: 111 mgKOH/g), and Hypermer KD-16 (mass-average molecular weight: 370, acid value: 299 mgKOH/g), all manufactured by Croda International Plc.

### (Other components)

The resin molding material according to the present embodiment may contain a component other than the above-described components. For example, the resin molding material according to the present embodiment may contain one or two or more of a low stress agent, a coupling agent, an adhesion aid, a mold release agent, a coloring agent, an antioxidant, an anticorrosion agent, a dye, a pigment, a flame retardant, and the like.

Examples of the low stress agent include silicone compounds such as a polybutadiene compound, an acrylonitrile butadiene copolymer compound, a silicone oil, and a silicone rubber. In a case where a low stress agent is used, only one type may be used, or two or more types may be used in combination.

As the coupling agent, the above-described coupling agent used for the surface treatment of the magnetic particles can be used. Examples thereof include a silane-based coupling agent, a titanium-based coupling agent, a zirconia-based coupling agent, and an aluminum-based coupling agent. In a case where a coupling agent is used, only one type may be used, or two or more types may be used in combination.

Industrially, the resin molding material according to the present embodiment can be produced by, for example, (1) mixing each component using a mixer, (2) kneading the mixture at approximately 120°C for equal to or more than 5 minutes, preferably approximately 10 minutes using a roll to obtain a kneaded product, (3) cooling the obtained kneaded product, and then (4) pulverizing the obtained kneaded product. From the above, a powdery resin molding material can be obtained. Since the powdery resin molding material according to the present embodiment is suppressed from agglomeration and solidification, the resin molding material has excellent fluidity and improved handleability.

### (Form of resin molding material)

The resin molding material according to the present embodiment is preferably in a form of tablets or granules at 23°C, and more preferably in a form of tablets at 23°C. The powdery resin molding material can be tableted to form a tablet. Since the resin molding material is in the form of tablets or granules, it is easy to distribute and store the resin molding material, and it is easy to adopt the resin molding material to transfer molding or compression molding.

The powdery resin molding material according to the present embodiment is suppressed from agglomeration and solidification, and can be made into a tablet-shaped or granular composition having a uniform composition.

### (Characteristics in a case where resin molding material is melted)

Since the resin molding material according to the present embodiment contains a predetermined amount of the silicone compound (B), it is possible to improve the fluidity of the resin molding material in a case of being melted, and to enhance the fillability, the moldability, and the like.

The fillability and moldability of the resin molding material can be accurately confirmed by the following "Spreadability test" in a case where the resin molding material is melted. That is, by carrying out the spreadability test, in a case where stress is continuously applied to the entire molten resin molding material, it is possible to confirm the characteristics of melting and spreading of the molten material, and it is possible to more accurately confirm the fillability and moldability to the mold under conditions close to conditions of the actual producing process. Due to the excellent characteristics of the resin molding material, in injection molding, it is possible to accurately confirm the fillability and moldability to a narrow part of the mold, and in compression molding, in particular, it is possible to accurately confirm the moldability as well as the fillability to the mold in a case where the material is placed in a mold and then heated and pressed.

### (Spreadability test)

A spoonful (2.0 ml) of the resin molding material for gel measurement was placed on a gel plate at 175°C. A mold for thin burr measurement (lower mold: 3, 000 g) heated to 175°C is placed thereon, and allowed to stand for 5 minutes . The mold for thin burr measurement is removed, and the diameter of the resin molding material expanded into a substantially circular shape is measured.

Specifically, a flow length measured by a spiral flow test at a temperature of 175°C can be equal to or more than 30 cm, preferably equal to or more than 40 cm and more preferably equal to or more than 45 cm.

As the spiral flow test, for example, with a low-pressure transfer molding machine ("KTS-15" manufactured by KOHTAKI Corporation), the resin molding material is injected into a mold for measuring spiral flow according to EMMI-1-66 under conditions of a mold temperature of 175°C, an injection pressure of 6.9 MPa, and a pressure holding time of 180 seconds, thereby measuring the flow length.

In addition, in the resin molding material according to the present embodiment, a Koka-type viscosity, which is measured with a Koka-type viscosity measuring device under conditions of a measuring temperature of 175°C and a load of 40 kgf, is equal to or more than 30 Pa·s and equal to or less than 300 Pa·s, preferably equal to or more than 50 Pa·s and equal to or less than 250 Pa·s, and more preferably equal to or more than 60 Pa·s and equal to or less than 200 Pa·s.

### (Glass transition temperature of cured product)

A glass transition temperature of a cured product which is obtained by melting and molding the resin molding material according to the present embodiment at 175°C and curing the resin molding material according to the present embodiment in an atmosphere at 175°C for 4 hours is preferably 150°C to 220°C and more preferably 160°C to 200°C. By designing the resin molding material so that the glass transition temperature is equal to or higher than 150°C, for example, it is easy to clear heat resistance required for in-vehicle applications. By designing the resin molding material so that the glass transition temperature is equal to or lower than 220°C, it is possible to mold the solid resin molding material at a relatively low temperature. This is preferable in terms of suppressing shrinkage of a molded product due to low temperature processing.

### <Molded product>

A molded product according to the present embodiment can be obtained by curing the above-described resin molding material. Since the powdery resin molding material according to the present embodiment is highly filled with the soft magnetic particles (A), the resin molding material has excellent fillability and moldability, so that the obtained molded product (magnetic material) has a uniform composition, and can exhibit desired properties in terms of magnetic characteristics such as magnetic permeability and saturation magnetic flux density, and in terms of mechanical strength.

Specifically, a relative magnetic permeability of the molded product according to the present embodiment is equal to or more than 40, preferably equal to or more than 42 and more preferably equal to or more than 45.

In addition, the molded product according to the present embodiment has a uniform composition as described above and includes a composite material having a high saturation magnetic flux density as described above, a high saturation magnetic flux density can be realized, which is equal to or more than 1.0T, preferably equal to or more than 1.2 T and more preferably equal to or more than 1.3 T.

A method for producing a molded product is not particularly limited, and examples thereof include a transfer molding method and a compression molding method.

### (Transfer molding method)

A method for producing a molded product by the transfer molding method includes a step of injecting a molten material of the above-described resin molding material into a mold using a transfer molding apparatus, a step of curing the molten material, and a step of releasing a molded product from the mold.

The transfer molding can be performed by appropriately using a known transfer molding apparatus. Specifically, first, a preheated resin molding material is placed in a heating chamber, which is also called a transfer chamber, and melted to obtain a molten material. Thereafter, the molten material is injected into a mold with a plunger and held as it is to cure the molten material. As a result, a desired molded product can be obtained.

From the viewpoint of controllability of dimensions of the molded product, improvement of degree of freedom in shape, and the like, the transfer molding is preferable.

Various conditions in the transfer molding can be set optionally. For example, the preheating temperature can be appropriately adjusted to 60°C to 100°C, the heating temperature for melting can be appropriately adjusted to 100°C to 250°C, the mold temperature can be appropriately adjusted to 100°C to 200°C, and the pressure at which the molten material of the resin molding material is injected into the mold can be appropriately adjusted to 1 to 20 MPa.

By not raising the mold temperature too high, shrinkage of the molded product can be suppressed.

### (Compression molding method)

A method for producing a molded product by the compression molding method includes a step of compression-molding the above-described resin molding material. Specifically, the method for producing a molded product by the compression molding method includes a step of compression-molding the resin molding material according to the present embodiment in a mold, and a step of releasing the molded product from the mold.

The compression molding can be performed by appropriately using a known compression molding apparatus. Specifically, the above-described resin molding material is placed in a concave portion of a concave fixed mold which opens upward. The resin molding material can be preheated. As a result, the molded product can be uniformly cured, and the molding pressure can be reduced.

Next, from above, a convex mold is moved to the concave fixed mold, and the resin molding material is compressed in a cavity formed by the convex portion and the concave portion. First, the resin molding material is sufficiently softened and fluidized at a low pressure, then the mold is closed, and the pressure is applied again thereto to cure the resin molding material for a predetermined time.

Various conditions in the compression molding can be set optionally. For example, the preheating temperature can be appropriately adjusted to 60°C to 100°C, the heating temperature for melting can be appropriately adjusted to 100°C to 250°C, the mold temperature can be appropriately adjusted to 100°C to 200°C, the pressure for compressing the resin molding material with the mold can be appropriately adjusted to 1 to 20 MPa, and the curing time can be appropriately adjusted to 60 to 300 seconds.

By not raising the mold temperature too high, shrinkage of the molded product can be suppressed.

Since a magnetic material with high magnetic permeability is obtained from the resin molding material according to the present embodiment, the molded product obtained by curing the resin molding material can be used for a magnetic core in an inductor or an exterior member for sealing a magnetic core and a coil.

An overview of a structural body (integrated inductor) provided with an exterior member including the cured product of the resin molding material according to the present embodiment will be described with reference to Figs. 1A and 1B.

Fig. 1A shows an overview of the structural body as viewed from above a structural body 100. Fig. 1B shows a cross-sectional view taken along a line A-A' in Fig. 1A.

As shown in Figs. 1A and 1B, the structural body 100 of the present embodiment can include a coil 10 and a magnetic core 20. The magnetic core 20 is filled inside the coil 10 which is an air-core coil. The coil 10 and the magnetic core 20 are sealed by an exterior member 30 (sealing member). The magnetic core 20 and the exterior member 30 can include the cured product of the resin molding material according to the present embodiment. The magnetic core 20 and the exterior member 30 may be formed as seamless integral members.

As a method for producing the structural body 100 of the present embodiment, for example, the coil 10 is placed in a mold, and molding such as transfer molding is performed using the resin molding material according to the present embodiment to cure the resin molding material. As a result, the magnetic core 20 filled in the coil 10 and the exterior member 30 around the magnetic core 20 can be integrally formed. In this case, the coil 10 may have a drawing portion (not shown) in which an end portion of the winding is pulled out to an outside of the exterior member 30.

The coil 10 is usually formed by winding a winding having an insulating coating on the surface of a metal wire. The metal wire preferably has high conductivity, and copper and copper alloys can be suitably used. In addition, as the insulating coating, a coating such as enamel can be used. Examples of a cross-sectional shape of the winding include a circular shape, a rectangular shape, and a hexagonal shape.

On the other hand, a cross-sectional shape of the magnetic core 20 is not particularly limited, but for example, in cross-sectional view, the cross-sectional shape may be a circular shape or a polygonal shape such as a quadrangle shape or a hexagon shape. Since the magnetic core 20 includes a transfer molded product of the resin molding material according to the present embodiment, it is possible to have a desired shape.

According to the cured product of the resin molding material according to the present embodiment, the magnetic core 20 and exterior member 30, which have excellent moldability and magnetic characteristics such as high magnetic permeability, can be realized, so that low magnetic loss is expected in the structural body 100 (integrated inductor) including these members. In addition, since the exterior member 30 having excellent mechanical properties can be realized, it is possible to improve durability, reliability, and manufacturing stability of the structural body 100. Therefore, the structural body 100 of the present embodiment can be used as an inductor for a booster circuit or a large current.

The embodiments of the present invention have been described above, but these are examples of the present invention and various configurations other than the above can be adopted as long as the effects of the present invention are not impaired.

### EXAMPLES

Hereinafter, the present invention will be described in more detail by Examples, but the present invention is not limited thereto.

### <Examples 1 to 5 and Comparative Examples 1 and 2>

First, each component described in Table 1 was prepared at the described ratio, and while mixing soft magnetic particles first, other components were added and uniformly mixed to obtain a mixture.

Next, the obtained mixture was kneaded at 120°C for 10 minutes. After completion of the kneading, the obtained kneaded product was cooled to room temperature to be solidified, and then pulverized and tableted. From the above, a tablet-shaped resin molding material was obtained.

Raw material components listed in Table 1 are shown below. Table 1 shows evaluation results of the resin molding material and the molded product. The content (% by volume) of soft magnetic particles shown in Table 1 is a content (that is, a filling rate) in a case where the resin molding material containing soft magnetic particles is set as 100% by volume.

### (Soft magnetic particles)

Iron-based particles 1: amorphous magnetic powder (manufactured by Epson Atmix Corporation, KUAMET6B2, median diameter D₅₀: 50 µm)
Iron-based particles 2: amorphous magnetic powder (manufactured by Epson Atmix Corporation, AW2-08, median diameter D₅₀: 4 um)

### (Silica fine powder)

Silica fine powder 1: molten silica, median diameter D₅₀ = 0.5 µm

### (Epoxy resin)

Epoxy resin 1: jER1032H60 (epoxy resin including a triphenylmethane structure, manufactured by Mitsubishi Chemical Corporation; solid at 23°C; containing the structural unit represented by General Formula (a1) described above)
Epoxy resin 2: YL-6810 (bisphenol A-type epoxy resin manufactured by Mitsubishi Chemical Corporation; solid at 23°C; containing the structure represented by General Formula (EP) described above)
Epoxy resin 3: NC3000L (biphenylaralkyl-type epoxy resin manufactured by Nippon Kayaku Co., Ltd.; solid at 23°C; containing the structural unit represented by General Formula (BP1) described above)
(Curing agent)
Curing agent 1: PR-HF-3 (novolac-type phenol resin manufactured by Sumitomo Bakelite Co., Ltd.; solid at 23°C)
Curing agent 2: MEH-7851SS (biphenylene skeleton-containing phenol aralkyl resin manufactured by MEIWA PLASTIC INDUSTRIES, LTD.; solid at 23°C)
(Adhesion aid)
Adhesion aid 1: CDA-1M (heavy metal inactivating agent, manufactured by ADEKA Corporation)
(Mold release agent)
Mold release agent 1: WE-4 (wax, manufactured by Clariant)
(Catalyst)

Catalyst 1: compound represented by the following chemical formula

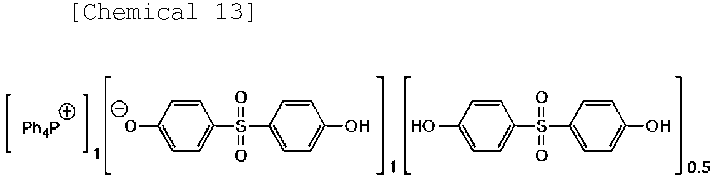

37.5 g (0.15 mol) of 4,4'-bisphenol S and 100 ml of methanol were charged into a separable flask equipped with a stirring device and dissolved under stirring at room temperature. A solution obtained by dissolving 4.0 g (0.1 mol) of sodium hydroxide in 50 ml of methanol in advance was further added thereto under stirring. Subsequently, a solution obtained by dissolving 41.9 g (0.1 mol) of tetraphenylphosphonium bromide in 150 ml of methanol in advance was added to the mixture. Stirring was continued for a while, 300 ml of methanol was added thereto, and then the solution in the flask was added dropwise to a large amount of water under stirring to obtain white precipitates. The precipitates were filtered and dried to obtain the catalyst 1 as white crystals.

Catalyst 2: compound represented by the following chemical formula

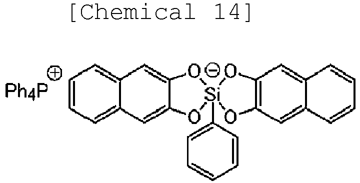

249.5 g of phenyltrimethoxysilane and 384.0 g of 2,3-dihydroxynaphthalene were added and dissolved in a flask containing 1800 g of methanol, and 231.5 g of 28% sodium methoxide-methanol solution was added dropwise thereto with stirring at room temperature. In a case where a solution prepared by dissolving 503.0 g of tetraphenylphosphonium bromide in 600 g of methanol in advance was added dropwise thereto with stirring at room temperature, crystals were precipitated. The precipitated crystals were filtered, washed with water, and dried in a vacuum to obtain a catalyst 2 as pink-white crystals.

### (Coupling agent)

· Coupling agent 1: CF-4083 (phenylaminopropyltrimethoxysilane, manufactured by Toray·Dow Corning)

### (Metal dispersant)

· Dispersant 1: Hypermer KD-9 (mass-average molecular weight: 760, acid value: 74 mgKOH/g; manufactured by Croda International Plc)

### (Silicone compound)

Silicone oil: silicone oil represented by the following chemical formula (liquid at normal temperature (25°C), FZ-3730, manufactured by Toray·Dow Corning)

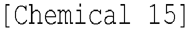

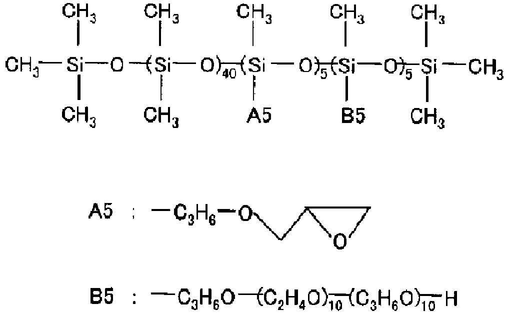

### <Evaluation>

### (Spreadability test)

A spoonful (2.0 ml) of the resin molding material for gel measurement was placed on a gel plate at 175°C. A mold for thin burr measurement (lower mold: 3,000 g) heated to 175°C was placed thereon, and allowed to stand for 5 minutes . The mold for thin burr measurement was removed, and the diameter of the resin molding material expanded into a substantially circular shape was measured.

### (Fluidity: spiral flow test)

A spiral flow test was performed using the resin molding materials of Examples and Comparative Examples.

For the test, with a low-pressure transfer molding machine ("KTS-15" manufactured by KOHTAKI Corporation), the resin molding material was injected into a mold for measuring spiral flow according to EMMI-1-66 under conditions of a mold temperature of 175°C, an injection pressure of 6.9 MPa, and a pressure holding time of 180 seconds, thereby measuring a flow length. As the numerical value is larger, the fluidity is better.

### (Koka-type viscosity)

Using a Koka-type viscosity measuring device (Koka-type flow tester, Shimadzu Corporation, CFT-100EX), a Koka-type viscosity of the resin molding material was measured under conditions of a measuring temperature of 175°C, a load of 40 kgf, and a nozzle size of 1.0 mm in diameter × 10 mm in length.

### (Relative magnetic permeability)

The resin molding material was injection-molded using a low-pressure transfer molding machine ("KTS-30" manufactured by KOHTAKI Corporation) at a mold temperature of 175°C, an injection pressure of 9.8 MPa, and a curing time of 120 seconds to obtain a columnar molded product having a diameter of 50 mmΦ and a thickness of 3 mm. Next, the obtained molded product was cured at 175°C for 4 hours. Thereafter, with a router processing machine, the molded product was processed into a toroidal shape with an outer diameter of 27 mmΦ and an inner diameter of 15 mmΦ, thereby producing a test piece for evaluating relative magnetic permeability. A 42-turn primary coil and a 42-turn secondary coil were wound around the obtained toroidal-shaped molded product, and using a DC/AC magnetization property tester ("MTR-1488" manufactured by Metron Giken Co., Ltd.), AC measurement was performed. A value at a frequency of 50 kHz and a magnetic flux density of 50 mT was determined as the relative magnetic permeability.

**[Table 1]**

| | Product name | Unit | Comparative Exa mple 1 | Example 1 | Example 2 | Comparative Exa mple 2 | Example 3 | Example 4 | Example 5 |
|---|---|---|---|---|---|---|---|---|---|
| Iron-based particles 1 | KUAMET6B2 | % by mass | 77.37 | 77.37 | 77.24 | 77.37 | 77.37 | 77.24 | 77.12 |
| Iron-based particles 2 | AW2-08 | | 19.34 | 19.34 | 19.31 | 19.34 | 19.34 | 19.31 | 19.28 |
| Silica fine powder 1 | | | | | 0.37 | | | 0.37 | 0.73 |
| Epoxy resin 1 | jER1032H60 | | 1.36 | 1.36 | 1.26 | | | | |
| Epoxy resin 2 | YL6810 | | 0.35 | 0.35 | 0.32 | | | | |
| Epoxy resin 3 | NC3000L | | | | | 1.57 | 1.58 | 1.47 | 1.36 |
| Curing agent 1 | PR-HF-3 | | 1.05 | 1.05 | 0.97 | | | | |
| Curing agent 2 | MEH-7851SS | | | | | 1.15 | 1.16 | 1.08 | 1.00 |
| Adhesion aid 1 | CDA-1M | | 0.07 | 0.07 | 0.06 | 0.07 | 0.07 | 0.06 | 0.06 |
| Hold release agent 1 | WE-4 | | 0.06 | 0.06 | 0.05 | 0.06 | 0.06 | 0.05 | 0.05 |
| Catalyst 1 | | | 0.01 | 0.01 | 0.01 | 0.01 | 0.01 | 0.01 | 0.01 |
| Catalyst 2 | | | 0.05 | 0.05 | 0.04 | 0.08 | 0.06 | 0.06 | 0.05 |
| Coupling agent 1 | CF-4083 | | 0.15 | 0.15 | 0.15 | 0.15 | 0.15 | 0.15 | 0.15 |
| Dispersant 1 | Hypermer KD-9 | | 0.20 | 0.10 | 0.10 | 0.20 | 0.10 | 0.10 | 0.10 |
| Silicone oil | FZ-3730 | | | 0.10 | 0.10 | | 0.10 | 0.10 | 0.10 |
| Total | | | 100 | 100 | 100 | 100 | 100 | 100 | 100 |
| Content of magnetic particles | | % by volu me | 84.0 | 84.0 | 84.0 | 84.0 | 84.0 | 84.0 | 84.0 |
| Spreadability test | | mm | 40 | 48 | 54 | 46 | 57 | 62 | 62 |
| Spiral flow (175°C) | | cm | 41 | 42 | 41 | 46 | 57 | 56 | 56 |
| Koka-type viscosity (175°C) | | Pa·s | 105 | 98 | 131 | 85 | 68 | 115 | 119 |
| Relative magnetic permeability | | - | 47 | 47 | 47 | 47 | 47 | 47 | 47 |

As shown in Table 1, in comparison between Comparative Example 1 and Examples 1 and 2, and between Comparative Example 2 and Examples 3 to 5, as a result of the spread test, the resin molding material of Examples according to the present invention has a large diameter, and is excellent in melting and spreading characteristics in a case where stress is continuously applied to the entire molten resin molding material. Therefore, it is conjectured that the fillability, moldability, and the like to the mold are excellent. Furthermore, since the soft magnetic particles can be highly filled, a magnetic material with high magnetic permeability is obtained.

Priority is claimed on Japanese Patent Application No. 2020-168308, filed on October 5, 2020, the disclosure of which is incorporated herein by reference.

### REFERENCE SIGNS LIST

- 100: structural body
- 10: coil
- 20: magnetic core
- 30: exterior member

## Claims

1. A resin molding material used for transfer molding or compression molding, comprising:
(A) soft magnetic particles;
(B) a silicone compound which is liquid at normal temperature (25°C); and
(C) a thermosetting resin,
wherein a content of the soft magnetic particles (A) is equal to or more than 96% by mass.

2. The resin molding material according to claim 1,
wherein a content of the silicone compound (B) is equal to or less than 0.5% by mass.

3. The resin molding material according to claim 1 or 2,
wherein the silicone compound (B) is represented by General Formula (1), 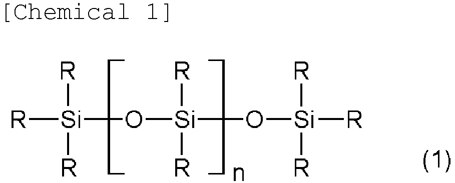
wherein, in General Formula (1), R's each independently represent a substituted or unsubstituted monovalent organic group having 1 to 10 carbon atoms, at least one of R's is a group selected from an amino group-substituted organic group, an epoxy group-substituted organic group, a polyoxyalkylene group-containing organic group, a hydroxyl group-substituted organic group, a vinyl group-substituted organic group, a carboxyl group-substituted organic group, an isocyanate group-substituted organic group, a mercapto group-substituted organic group, a (meth)acrylic group-substituted organic group, and an acid anhydride group-substituted organic group, and n represents an integer of 1 to 100.

4. The resin molding material according to any one of claims 1 to 3,
wherein the thermosetting resin (C) is an epoxy resin.

5. The resin molding material according to any one of claims 1 to 4,
wherein the epoxy resin is at least one selected from a bisphenol A-type epoxy resin, a tris(hydroxyphenyl)methane-type epoxy resin, and a biphenylaralkyl-type epoxy resin.

6. The resin molding material according to any one of claims 1 to 5, further comprising:
(D) a phenol curing agent.

7. The resin molding material according to claim 6,
wherein the phenol curing agent (D) is at least one selected from a novolac-type phenol resin and a biphenylaralkyl-type phenol resin.

8. The resin molding material according to any one of claims 1 to 7, further comprising:
(E) a curing accelerator,
wherein the curing accelerator (E) is selected from the group consisting of a tetra-substituted phosphonium compound, a phosphobetaine compound, a phosphine compound, an adduct of a phosphine compound and a quinone compound, and an adduct of a phosphonium compound and a silane compound.

9. The resin molding material according to any one of claims 1 to 8, further comprising:
(F) a silica fine powder having an average particle diameter of equal to or more than 0.1 µm and equal to or less than 2.0 µm.

10. The resin molding material according to any one of claims 1 to 9,
wherein the resin molding material is in a form of tablets or granules at 23°C.

11. The resin molding material according to any one of claims 1 to 10,
wherein a spiral flow length, which is measured according to EMMI-1-66 method under conditions of a mold temperature of 175°C, an injection pressure of 6.9 MPa, and a pressure holding time of 180 seconds, is equal to or more than 30 cm.

12. The resin molding material according to any one of claims 1 to 11,
wherein a Koka-type viscosity, which is measured with a Koka-type viscosity measuring device under conditions of a measuring temperature of 175°C and a load of 40 kgf, is equal to or more than 30 Pa·s and equal to or less than 300 Pa·s.

13. A molded product obtained by curing the resin molding material according to any one of claims 1 to 12.

14. The molded product according to claim 13,
wherein a relative magnetic permeability is equal to or more than 40.

15. A method for producing a molded product, comprising:
a step of injecting a molten material of the resin molding material according to any one of claims 1 to 12 into a mold using a transfer molding apparatus; and
a step of curing the molten material.

16. A method for producing a molded product, comprising:
a step of compression-molding the resin molding material according to any one of claims 1 to 12.

17. A resin molding material used for transfer molding or compression molding, comprising:
(A) soft magnetic particles;
(B) a silicone compound; and
(C) a thermosetting resin,
wherein a content of the soft magnetic particles (A) is equal to or more than 96% by mass, and
a content of the silicone compound (B) is equal to or less than 0.5% by mass.
